# EUROPÄISCHE PATENTSCHRIFT

(11) **EP 1 263 814 B1**
(45) Veröffentlichungstag und Bekanntmachung des Hinweises auf die Patenterteilung: **02.06.2004**
(21) Anmeldenummer: 01931503.5
(22) Anmeldetag: 09.03.2001
(51) Int. Cl.: C08F 26/06, C08F 2/22

(54) **VERWENDUNG VON QUERVERNETZTEM POLYVINYLPYRROLIDON ALS SPRENGMITTEL IN KOMPAKTEN, TEILCHENFÖRMIGEN WASCH- UND REINIGUNGSMITTELN**
USED OF CROSS-LINKED POLYVINYLPYRROLIDONE AS A DISINTEGRANT IN COMPACT, PARTICULATE DETERGENTS AND CLEANING AGENTS
UTILISATION DE POLYVINYLPYRROLIDONE A RETICULATION TRANSVERSALE EN TANT QU'AGENT D'ECLATEMENT DANS DES PRODUITS DE LAVAGE ET DE NETTOYAGE PARTICULAIRES COMPACTS

(30) Priorität: 10.03.2000 DE 10011137; 19.01.2001 DE 10102538
(43) Veröffentlichungstag der Anmeldung: 11.12.2002
(73) Patentinhaber: BASF AKTIENGESELLSCHAFT, 67056 Ludwigshafen (DE)
(72) Erfinder: MEFFERT, Helmut, 67065 Ludwigshafen (DE); BERTLEFF, Werner, 68519 Viernheim (DE); KERBER, Michael, 69469 Weinheim (DE); SPANG, Peter, 66386 St Ingbert (DE); BAUR, Richard, 67112 Mutterstadt (DE); GOMEZ, Marcos, 69117 Heidelberg (DE)
(86) Internationale Anmeldenummer: PCT/EP2001/002644
(87) Internationale Veröffentlichungsnummer: WO 2001/066612

(56) Entgegenhaltungen:
- EP-A- 0 175 335
- EP-A- 0 508 358
- US-A- 4 956 430

## Beschreibung

Die Erfindung betrifft die Verwendung von quervernetztem Polyvinylpyrrolidon in einer spezifischen Partikel-Zusammensetzung als Sprengmittel in kompakten, teilchenförmigen Wasch- und Reinigungsmitteln, die Partikel-Zusammensetzung und die kompakten, teilchenförmigen Waschmittel selbst, ein Verfahren zur Herstellung der kompakten, teilchenförmigen Wasch- und Reinigungsmittel, sowie ein Verfahren zur Herstellung der spezifischen Partikel-Zusammensetzung.

Kompakte Wasch- und Reinigungsmittelformulierungen werden mit Hilfe unterschiedlicher Agglomerierungs-, Kompaktierungs- oder Tablettierungstechnologien hergestellt. Im Fall von Wasch- und Reinigungsmittelkompaktprodukten, die beispielsweise in Form von Tabletten vorliegen, ist es schwierig, die Balance zwischen ausreichender Festigkeit und hinreichend rascher Auflösung bzw. raschem Zerfall bei der Einwirkung von Wasser herzustellen.

So müssen beispielsweise Waschmitteltabletten, die in die Einspülkammer der Waschmaschine dosiert werden, beim Zusammenbringen mit Wasser innerhalb eines Zeitraums von weniger als einer Minute zerfallen. Bei einem leichten Kompaktierungsgrad von Waschmitteltabletten wird zwar eine zufriedenstellende Zerfallsgeschwindigkeit bei der Anwendung erreicht, jedoch oftmals nicht die gewünschte Bruchhärte bzw. Abriebfestigkeit. So hergestellte Tabletten weisen nur eine geringe Bruchfestigkeit auf und neigen zum Abbröckeln und zerbrechen beim Transport.

Auf der anderen Seite führt ein zu starkes Kompaktieren oder Pressen bei der Herstellung von Waschmitteltabletten zu unbefriedigend langen Zerfalls- bzw. Auflösezeiten der Waschmitteltabletten bei der Anwendung.

Kompakte bzw. ultrakompakte Wasch- und Reinigungsmittel sind beispielsweise aus EP-A-340013, EP-A-0518888, DE-A-19649560 und DE-A-19649565 bekannt.

Aus der Technologie der pharmazeutischen Tablettenherstellung sind zahlreiche Möglichkeiten bekannt, Tabletten gewünschter Festigkeit und Zerfallszeit herzustellen. Als hauptsächlich wirksame Mechanismen, die den Zerfall von Tabletten bewirken, werden die Netzung, Kapillareffekte (Wicking) und Quellung beschrieben, vgl. Drug Development and Industrial Pharma, Band 6 (5) 511-536 (1980).

Unter den beschriebenen Produkten, die zu einer verbesserten Löslichkeit von Tabletten führen, werden auch chemisch vernetzte, quellende Produkte wie mikrokristalline vernetzte Carboxymethylcellulose, vernetzte Na-Carboxymethylstärke oder vernetztes Polyvinylpyrrolidon (siehe auch Volker Bühler, Kollidon - Polyvinylpyrrolidone for the pharmaceutical industry, BASF August 1993, S. 156 f.) genannt.

Aufgrund des Anteils von nichtionischen Tensiden und anderen niedrigschmelzenden wachsartigen, plastisch verformbaren Massen in Waschmitteln ist der Zusatz von Tablettensprengmitteln, welche aus der Pharmazie bekannt sind, zu kompakten Wasch- und Reinigungsmitteln, speziell bei kompakten Waschmitteln zum Waschen von Wäsche selten erfolgreich.

US 5,360,567 offenbart kompakte Waschmitteltabletten, die als Binder/Sprengmittel u.a. quervernetztes Polyvinylpyrrolidon der Marken Kollidon CL^{(R)} oder Polyplasdone XL^{(R)} enthalten können. Unter diesen Marken werden Partikel-Zusammensetzungen aus Partikeln aus quervernetztem Polyvinylpyrrolidon verstanden, die eine Partikelgrößen-Verteilung von ca. 30 µm bis 170 µm und eine mittlere Partikelgröße X₅₀ von ca. 75 µm bis 100 µm aufweisen. Durch Einstellung der Partikelgrößenverteilung aller Inhaltststoffe der kompakten Waschmittel vor der Kompaktierung auf eine Größe von 200 bis 2000 µm, wird zwar ein verbessertes Auflöseverhalten der Waschmitteltabletten erreicht, die ereichten Ergebnisse sind aber noch nicht berfriedigend. Das Verfahren hat weiterhin den Nachteil, daß alle Inhaltstoffe der Waschmitteltablette auf eine bestimmte Teilchengröße eingestellt werden müssen.

Weitere kompakte Waschmitteltabletten mit quervernetztes Polyvinylpyrrolidon der Marken Kollidon CL^{(R)} oder Polyplasdone XL^{(R)} : als Binder/Sprengmittel sind in US 6,025,315 und US 5,407,594 beschrieben. Auch hier sind die erreichten Auflösegeschwindigkeiten in Wasser bei der Menge der verwendeten Sprengmittel noch nicht befriedigend.

EP 1036839 beschreibt die Verwendung von von quervernetztem Polyvinylpyrrolidon als Zusatz zu kompakten, teilchenförmigen Waschund Reinigungsmitteln zur Erhöhung ihrer Zerfallsgeschwindigkeit beim Zusammenbringen mit Wasser, wobei die Partikel des quervernetzten Polyvinylpyrrolidons eine Korngröße von 50 bis 400 µm aufweisen. Durch diese spezifische Korngrößenverteilung von 50 bis 400 µm, die beispielsweise durch Klassierung von Polyvinylpyrrolidon, welches in einer breiten Korngrößenverteilung anfällt, eingestellt werden kann, werden sehr schnelle Auflösegeschwindigkeiten der kompakten, teilchenförmigen Waschmittel erreicht, jedoch muß dazu noch eine hohe Menge an Sprengmittel eingesetzt werden.

Ferner ist aus DE 197 10 254 A1 bekannt, daß kompakte Wasch- und Reinigungsmittel (wasch- und reinigungsaktive Formkörper) eine erhöhte Zerfallsgeschwindigkeit aufweisen, wenn sie Sprengmittel, welche aus der Pharmazie bekannt und in der Lage sind, die Porosität bzw. Kapillarität der Formkörper zu erhöhen und ein hohes Adsorptionsvermögen für Wasser besitzen, in einer speziellen, granulierten Form enthalten. Die auf diese Weise hergestellten kompakten Wasch- und Reinigungsmittel zeigen zwar eine erhöhte, aber eine noch nicht ausreichend hohe Zerfallsgeschwindigkeit, insbesondere bei kompakten Wasch- und Reinigungsmitteln, die zur Erhöhung der Form- und Bruchfestigkeit mit höheren Preßdrücken verdichtet wurden. Ferner weisen die auf diese Weise hergestellten kompakten Wasch- und Reinigungsmittel den Nachteil auf, daß das Sprengmittel vor der Kompaktierung in einem aufwendigen Verfahrensschritt in eine granulierte Form überführt werden muß.

Der Erfindung liegt daher die Aufgabe zugrunde, Sprengmittel zur Verfügung zu stellen, die die Zerfallsgeschwindigkeit von kompakten, teilchenförmigen Wasch- und Reinigungsmitteln weiter erhöhen, nur in geringen Mengen eingesetzt werden müssen und die weiteren, vorstehend genannten Nachteile des Standes der Technik nicht aufweisen.

Die Aufgabe wird erfindungsgemäß gelöst durch die Verwendung einer Partikel-Zusammensetzung, enthaltend Partikel aus quervernetztem Polyvinylpyrrolidon als Sprengmittel in kompakten, teilchenförmigen Wasch- und Reinigungsmitteln,
wobei
A höchstens 10 Gew.-% der Partikel des quervernetzten Polyvinylpyrrolidons eine Partikelgröße kleiner 63 µm,
B höchstens 30 Gew.-% und mindestens 0,1 Gew.-% der Partikel des quervernetzten Polyvinylpyrrolidons eine Partikelgröße größer 1000 µm und
C mindestens 10 Gew.-% der Partikel des quervernetzten Polyvinylpyrrolidons eine Partikelgröße kleiner 200 µm aufweisen.

Durch die Verwendung dieser Partikel-Zusammensetzung, enthaltend Partikel aus quervernetztem Polyvinylpyrrolidon mit der spezifischen Partikelgrößenverteilung gemäß den Merkmalen A, B und C als Sprengmittel in kompakten, teilchenförmigen Wasch- und Reinigungsmitteln werden bei geringer Einsatzmenge der Sprengmittel und hoher Bruchkraft der kompakten, teilchenförmigen Wasch- und Reinigungsmittel sehr schnelle Auflösungszeiten in Wasser erreicht.

Unter Sprengmittel werden insbesondere Zusatzstoffe zu kompakten, teilchenförmigen Wasch- und Reinigungsmittel verstanden, die die Zerfallsgeschwindigkeit der kompakten, teilchenförmigen Waschund Reinigungsmittel beim Zusammenbringen mit Wasser im Vergleich zu sprengmittelfreien Wasch- und Reinigungsmitteln erhöhen.

Unter kompakten, teilchenförmigen Wasch- und Reinigungsmitteln werden erfindungsgemäß wasch- oder reinigungsaktive Formkörper, insbesondere Tabletten wie Waschmitteltabletten, Geschirrspülmitteltabletten, Bleichmitteltabletten, Fleckensalztabletten oder Wasserenthärtungstabletten, insbesondere Waschmitteltabletten für Wäsche für den Gebrauch im Haushalt, insbesondere für den maschinellen Gebrauch, verstanden. Der Begriff "Formkörper" ist nicht auf die Tablettenform beschränkt. Prinzipiell ist jede Raumform, wie beispielsweise Tabletten, Kugeln, Stränge, Ringe, Riegel oder Schuppen möglich, die den Ausgangsstoffen gegebenenfalls aufgrund eines äußeren Behältnisses aufgezwungen werden kann.

Die erfindungsgemäße Partikel-Zusammensetzung enthält Partikel aus quervernetztem Polyvinylpyrrolidon mit der spezifischen Partikelgrößenverteilung. Die erfindungsgemäße Partikel-Zusammensetzung kann gegebenenfalls weitere Additive enthalten. Diese Additive können den Partikeln aus quervernetztem Polyvinylpyrrolidon mit der spezifischen Partikelgrößenvertzeilung beigemischt werden oder die Partikel können bereits aus quervernetztem Polyvinylpyrrolidon und weiteren Additiven bestehen, so daß Mehrstoff-Partikel aus quervernetztem Polyvinylpyrrolidon und Additive vorliegen. In dieser bevorzugten Ausführungsform der Mehrstoffpartikel weisen die Mehrstoffpartikel vorzugsweise die erfindungsgemäße Partikelgrößenverteilung gemäß den Merkmalen A, B und C auf.

Als Additive kommen insbesondere die aus der pharmazeutischen Tablettierung bekannten Hilfsstoffe, wie beispielsweise mikrokristalline Cellulosen, Cellulosederivate, Stärken, anorganische Salze und Mineralien in Frage.

Vorzugsweise werden erfindungsgemäße Partikel-Zusammensetzungen verwendet, die aus Partikeln aus quervernetztem Polyvinylpyrrolidon mit der spezifischen Partikelgrößenverteilung bestehen und somit keine Additive enthalten.

Die erfindungsgemäßen Partikel-Zusammensetzungen enthalten, bzw. vorzusgweise bestehen aus Partikeln aus quervernetztem Polyvinylpyrrolidon, die eine Partikelgrößenverteilung aufweisen, in der
A höchstens 10 Gew.-% der Partikel des quervernetzten Polyvinylpyrrolidons eine Partikelgröße kleiner 63 mm,
B höchstens 30 Gew.-% und mindestens 0,1 Gew.-% der Partikel des quervernetzten Polyvinylpyrrolidons eine Partikelgröße größer 1000 µm und
C mindestens 10 Gew.-% der Partikel des quervernetzten Polyvinylpyrrolidons eine Partikelgröße kleiner 200 µm aufweisen.

Vorteilhaft lassen sich erfindungsgemäß Partikel-Zusammensetzungen verwenden, die Partikel aus quervernetztem Polyvinylpyrrolidon enthalten bzw. vorzugsweise aus Partikel aus quervernetztem Polyvinylpyrrolidon bestehen, die eine Partikelgrößenverteilung aufweisen, in der
A' höchstens 10 Gew.-%, vorzugsweise höchstens 5 Gew.-%, besonders bevorzugt höchstens 4 Gew.-%, insbesondere höchstens 3 Gew.-% der Partikel des quervernetzten Polyvinylpyrrolidons eine Partikelgröße kleiner 63 mm,
B' höchstens 30 Gew.-% und mindestens 0,1 Gew.-%, vorzugsweise höchstens 20 Gew.-% und mindestens 0,5 Gew-% der Partikel des quervernetzten Polyvinylpyrrolidons eine Partikelgröße größer 1000 µm,
C' mindestens 10 Gew.-% und höchstens 60 Gew.-%, vorzugsweie höchstens 40 Gew.-% der Partikel des quervernetzten Polyvinylpyrrolidons eine Partikelgröße kleiner 200 µm aufweisen und
D mindestens 5 Gew.-%, vorzugsweise mindestens 10 Gew.-% und höchstens 50 Gew.-%, vorzugsweise höchstens 40 Gew.-%, besonders bevorzugt höchstens 30 Gew.-% der Partikel des quervernetzten Polyvinylpyrrolidons eine Partikelgröße größer als 200 µm und kleiner als 400 µm aufweisen.

Besonders bevorzugt sind Partikelzusammensetzungen, die Partikel aus quervernetztem Polyvinylpyrrolidon enthalten bzw. vorzugsweise aus Partikeln aus quervernetztem Polyvinylpyrrolidon bestehen, die eine Partikelgrößenverteilung aufweisen, in der
A' höchstens 10 Gew.-%, vorzugsweise höchstens 5 Gew.-%, besonders bevorzugt höchstens 4 Gew.-%, insbesondere höchstens 3 Gew.-% der Partikel des quervernetzten Polyvinylpyrrolidons eine Partikelgröße kleiner 63 mm,
B' höchstens 30 Gew.-% und mindestens 0,1 Gew.-%, vorzugsweise höchstens 20 Gew.-% und mindestens 0,5 Gew-% der Partikel des quervernetzten Polyvinylpyrrolidons eine Partikelgröße größer 1000 µm,
C' mindestens 10 Gew.-% und höchstens 60 Gew.-%, vorzugsweie höchstens 40 Gew.-% der Partikel des quervernetzten Polyvinylpyrrolidons eine Partikelgröße kleiner 200 µm aufweisen,
D mindestens 5 Gew.-%, vorzugsweise mindestens 10 Gew.-% und höchstens 50 Gew.-%, vorzugsweise höchstens 40 Gew.-%, besonders bevorzugt höchstens 30 Gew.-% der Partikel des quervernetzten Polyvinylpyrrolidons eine Partikelgröße größer als 200 µm und kleiner als 400 µm aufweisen,
E mindestens 10 Gew.-%, vorzugsweise mindestens 15 Gew.-% und höchstens 50 Gew.-%, vorzugsweise höchstens 40 Gew.-% der Partikel des quervernetzten Polyvinylpyrrolidons eine Partikelgröße größer als 400 µm und kleiner als 630 µm aufweisen und
F mindestens 4 Gew.-%, vorzugsweise mindestens 10 Gew.-% und höchstens 40 Gew.-%, vorzugsweise höchstens 30 Gew.-%, der Partikel des quervernetzten Polyvinylpyrrolidons eine Partikelgröße größer als 630 µm und kleiner als 1000 µm aufweisen.

Ganz besonders vorteilhaft lassen sich erfindungsgemäß Partikelzusammensetzungen verwenden, die Partikel aus quervernetztem Polyvinylpyrrolidon enthalten bzw. vorzugsweise aus Partikel aus quervernetztem Polyvinylpyrrolidon bestehen, die eine Partikelgrößenverteilung aufweisen, in der
A" höchstens 3 Gew.-% der Partikel des quervernetzten Polyvinylpyrrolidons eine Partikelgröße kleiner 63 µm,
B " höchstens 30 Gew.-%, vorzugsweise höchstens 20 Gew.-% und mindestens 10 Gew.-%, der Partikel des quervernetzten Polyvinylpyrrolidons eine-Partikelgröße größer 1000 µm,
C" mindestens 10 Gew.-% und höchstens 30 Gew.-% der Partikel des quervernetzten Polyvinylpyrrolidons eine Partikelgröße kleiner 200 µm aufweisen,
D' mindestens 10 Gew.-% und höchstens 20 Gew.-% der Partikel des quervernetzten Polyvinylpyrrolidons eine Partikelgröße größer als 200 µm und kleiner als 400 µm aufweisen,
E' mindestens 20 Gew.-%, vorzugsweise mindestens 30 Gew.-% und höchstens 40 Gew.-% der Partikel des quervernetzten Polyvinylpyrrolidons eine Partikelgröße größer als 400 µm und kleiner als 630 µm aufweisen und
F' mindestens 15 Gew.-% und höchstens 30 Gew.-% der Partikel des quervernetzten Polyvinylpyrrolidons eine Partikelgröße größer als 630 µm und kleiner als 1000 µm aufweisen.

Besonders bevorzugte erfindungsgemäße Partikel-Zusammensetzungen weisen eine Partikelgrößen-Verteilung gemäß der Merkmale A, B und C, vorzugsweise gemäß der Merkmale A', B', C' und D, besonders bevorzugt gemäß der Merkmale A', B', C', D, E und F, insbesondere gemäß der Merkmale A", B", C", D', E' und F', sowie eine mittlere Partikelgröße X₅₀ größer 200 µm auf.

Die erfindungsgemäßen Partikel-Zusammensetzungen, die Partikel aus quervernetztem Polyvinylpyrrolidon mit der spezifischen Partikelgrößenverteilung enthalten, lassen sich durch verschiedene Verfahren herstellen.

Für die vorteilhaften Eigenschaften der erfindungsgemäßen Partikel-Zusammensetzung ist das Herstellverfahren nicht kritisch.

Die Herstellung der erfindungsgemäßen Partikel-Zusammensetzungen mit der erfindungsgemäßen Partikelgrößenverteilung kann beispielsweise durch entsprechendes Klassieren von, in an sich bekannter Weise mit breiter Partikelgrößenverteilung durch Polymerisation, wie beispielsweise Popcorn-Polymerisation und Trocknung hergestellten, Polyvinylpyrrolidonfestkörpern erfolgen.

Die Herstellung von quervernetztem Polyvinylpyrrolidon durch Popcornpolymerisation von N-Vinyl-Pyrrolidon ist beispielsweise in US 3933766 und in darin zitierten Schriften beschrieben.

Die Trocknung des erhlatenen quervernetzten Polyvinylpyrrolidon kann in an sich bekannter Weise, beispielsweise durch Walzentrocknung erfolgen.

Das anschließende Klassieren der Polyvinylpyrrolidonfestkörper kann beispielsweise durch Sieben oder Sichten erfolgen und so die erfindungsgemäße Partikelgrößenverteilung eingestellt werden.

Ferner ist es beispielsweise möglich, die erfindungsgemäße Partikel-Zusammensetzung mit der erfindungsgemäßen Partikelgrößenverteilung durch Granulieren von Partikel-Zusammensetzungen aus Partikeln aus quervernetztem Polyvinylpyrrolidon mit kleineren Partikelgrößen, wie beispiesweise Partikel-Zusammensetzungen der Marken Kollidon CL^{(R)} oder Polyplasdone XL^{(R)}, die eine Partikelgrößen-Verteilung von ca. 30 µm bis 170 µm und eine mittlere Partikelgröße von 75 µm bis 100 µm aufweisen, einzustellen.

Dabei läßt sich die erfindungsgemäße Partikelgrößen-verteilung direkt einstellen, gegebenenfalls wird die Partikelgrößen-Verteilung der erfindungsgemäße Partikel-Zusammensetzung durch einen anschließenden Klassierungsschritt eingestellt.

Weiterhin läßt sich die erfindungsgemäße Partikel-Zusammensetzung aus Partikeln aus quervernetzem Polyvinylpyrrolidon mit der erfindungsgemäßen Partikelgrößenverteilung auch direkt durch die Polymerisation herstellen. Die Einstellung der erfindungsgemäßen Partikelgrößen-Verteilungen der erfindungsgemäßen Partikel-Zusammensetzungen erfolgt dabei direkt während der Polymerisation. Ein Aufgranulierungsschritt oder Klassierungsschritt kann hierbei entfallen.

Bevorzugt erfolgt die Herstellung der erfindungsgemäßen Partikel-Zusammensetzung durch Polymerisation und anschließender Klassierung auf die spezielle Partikelgrößenverteilung oder durch direkte Herstellung der erfindungsgemäßen Partikel-Zusammensetzung in der spezielle Partikelgrößenverteilung während der Polymerisation, da bei diesen Verfahren der aufwendigere Schritt der Granulierung entfällt.

Besonders bevorzugt erfolgt die Herstellung der erfindungsgemäßen Partikel-Zusammensetzung durch direkte Herstellung der erfindungsgemäßen Partikel-Zusammensetzung in der spezielle Partikelgrößenverteilung während der Polimerisation.

Demgemäß betrifft die Anmeldung weiterhin ein Verfahren zur Herstellung der erfindungsgemäßen Partikel-Zusammensetzungen durch Popcornpolymerisation, wobei man Popcornpolymerisate bildende Reaktionsmischungen aus N-Vinyl-Pyrrolidon und Vernetzer unter Ausschluß von Sauerstoff und Polymerisationsinitiatoren bei Temperaturen bis zu 200°C polymerisiert, die Popcornpolymerisation als Fällungspolymerisation in Wasser oder in Substanz durchführt und die Partikelgröße der Popcornpolymeren durch Einleiten eines Inertgasstroms in die Reaktionsmischung regelt.

Bei einem vorgegebenen Volumen der Reaktionsmischung, daß je nach Dimension des Verfahrens und Ausführungsform des Reaktors unterschiedlich sein kann, wird die Partikelgrößen-Verteilung vor allem durch den Parameter der Menge des Inertgasstromes eingestellt.

Die Partikelgröße der Popcornpolymerisate wird durch die Menge des Inertgasstromes geregelt, der durch die Polymerisationslösung geleitet wird. Wird dem Reaktionsansatz wenig Inertgas zugeführt, so entstehen in der Regel grobe Popcornpolymerisate, wird die Polymerisationslösung mit viel Inertgas durchströmt, so entstehen feinere Popcorn-polymerisate.

In Abhängigkkeit von verschiedenen Rahmenbedingungen wie z.B. Kesselgröße, Temperatur und Druck, können keine exakten Bedingungen für die Einstellung einer bestimmten Partikelgröße für die Popcornpolymmerisate angegeben werden. Die für den Einzelfall richtige Menge an Inertgasstrom, die durch die Reaktionsmischung geleitet werden muß, kann durch wenige einfache Versuche leicht ermittelt werden.

Je größer das Volumen der Reaktionsmischung, um so geringer ist der Inertgasstrom, gemessen in 1 Inertgas pro Stunde und 1 Reaktionsmischung, der benötigt wird um eine vergleichbare Partikelgrößenverteilung zu erreichen, wie bei einem kleineren Volumen der Reaktionsmischung.

Bei Verfahren im Bereich von 1 bis 2000 Liter volumen der Reaktionsmischung benötigt man typischerweise 0,01 bis 100, vorzugsweise 0,05 bis 30 und insbesondere 0,1 bis 20 Liter Inertgas pro Stunde und Liter Reaktionsmischung.

Bei Verfahren im Bereich von 1,5 l Reaktionsmischung beträgt der Inertgasstrom vorzugsweise 2 bis 20 l Inertgas/h und Liter Reaktionsmischung, insbesondere 4 bis 13 l Inertgas/h und Liter Reaktionsmischung um die erfindungsgemäßen Partikel-Zusammensetzungen aus quervernetztem Polyvinylpyrrolidon mit der spezifischen Partikelgrößen-Verteilung zu erhalten.

Bei Verfahren im Bereich von 1500 l Reaktionsmischung beträgt der Inertgasstrom vorzugsweise 0,2 bis 1,2 l Inertgas/h und Liter Reaktionsmischung, insbesondere 0,3 bis 1,0 l Inertgas/h und Liter Reaktionsmischung um die erfindungsgemäßen Partikel-Zusammensetzungen aus quervernetztem Polyvinylpyrrolidon mit der spezifischen Partikelgrößen-Verteilung zu erhalten.

Als Inertgas können Edelgase wie Helium, Neon oder Argon verwendet werden. Auch Kohlendioxid ist geeignet. Vorzugsweise wird Stickstoff verwendet.

In einer bevorzugten Ausführungsform erfolgt dieses Verfahren zur Herstellung der erfindungsgemäßen Partikel-Zusammensetzungen aus quervernetztem Polyvinylpyrrolidon mit der spezifischen Partikelgrößen-Verteilung durch Polymerisation von
N-Vinyl-Pyrrolidon
in Gegenwart von 0,1 bis 10 Gew.-%, bezogen auf die Menge des eingesetzten Monomers N-Vinyl-Pyrrolidon, einer mindestens zwei ethylenisch ungesättigte Doppelbindungen enthaltenden Verbindung als Vernetzer unter Ausschluß von Polymerisatinitiatoren und Sauerstoff zu Popcorn-Polymerisaten.

Die Popcornpolymerisation kann beispielsweise durch Erhitzen von N-Vinylpyrrolidon und geringen Mengen, z. B. 0,4 bis 1,2 Gew.-% eines Vernetzers wie N,N'-Divinylethylenharnstoff, in wäßrigem Medium in Gegenwart von Alkali gestartet werden. Zum Starten der Popcornpolymerisation verwendet man vorzugsweise frisch destilliertes N-Vinylpyrrolidon.

Die Polymerisationstemperatur kann in einem weiten Bereich variiert werden, z. B. von etwa 20 bis 200, vorzugsweise 50 bis 150°C. Die Popcornpolymerisation gelingt besonders leicht in dem Temperaturbereich von etwa 60 bis 150°C in Abwesenheit von Sauerstoff und Polymerisationsinitiatoren.

Als Vernetzer werden Verbindungen eingesetzt, die mindestens zwei ethylenisch ungesättigte Doppelbindungen im Molekül enthalten. Besonders geeignet sind beispielsweise Alkylenbisacrylamide wie Methylenbisacrylamid und N,N'-Acryloylethylendiamin, N,N'-Divinylethylenharnstoff, N,N'-Divinylpropylenharnstoff, Ethylidenbis-3-(N-vinylpyrrolidon), N,N'-Divinyl-diimidazolyl(2,2')butan und 1,1'-bis-(3,3'-vinylbenzimidazolyl-2-on)1,4-butan. Andere geeignete Vernetzer sind beispielsweise Alkylenglykoldi(meth)acrylate wie Ethylenglykoldiacrylat, Ethylenglykoldimethacrylat, Tetraet-hylenglykolacrylat, Tetraethylenglykoldimethacrylat, Diethylenglykolacrylat, Diethylenglykolmethacrylat, aromatische Divinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer. Die Vernetzer werden in Mengen von 0,1 bis 10, vorzugsweise 1 bis 4 Gew.-%, bezogen auf die bei der Polymerisation eingesetzten Monomere N-Vinyl-pyrrolidon verwendet.

Vorzugsweise verwendet man als Vernetzer N,N'-Divinylethylenharnstoff.

Die Popcornpolymerisation wird nach bekannten Verfahren durchgeführt, z. B. als Fällungspolymerisation oder durch Polymerisieren in Substanz. Bekannt ist beispielsweise eine Arbeitsweise, bei der man - wie in der EP-B-0 177 812 beschrieben - die Popcornpolymerisation dadurch startet, daß man eine Mischung aus 99,6 bis 98,8 Gew.-% N-Vinylpyrrolidon und 0,4 bis 1,2 Gew.-% einer mindestens zwei ethylenisch ungesättigte Doppelbindungen aufweisenden Verbindung als Vernetzer auf eine Temperatur in dem Bereich von 100 bis 150 °C in Abwesenheit von Sauerstoff und Polymerisationsinitiatoren erhitzt.

Diese Polymerisation wird vorzugsweise durch Anwesenheit geringer Mengen an Natronlauge oder Kalilauge initiiert. Innerhalb einer kurzen Zeit bildet sich ein polymerisationsfähiges Popcornpolymerisat, das bei Zugabe weiteren N-Vinyl-Pyrrolidons und weitere Zugabe des Vernetzers die Popcornpolymerisation dieser Monomeren ohne Induktionsperiode startet und vervollständigt, wobei man erfindungsgemäß zur Regelung der Partikelgröße der entstehenden Popcornpolymerisate einen Inertgasstrom vorzugsweise in die im Polymerisationsgefäß vorgelegten Monomeren bereits vor Beginn der Popcornpolymerisation leitet. Mit dem Einleiten des Inertgasstroms wird jedoch spätestens während der Induktionsperiode der Polymerisation begonnen, wobei der Inertgasstrom während der gesamten Dauer der Popcornpolymerisation durch die Reaktionsmischung geleitet wird.

Um die Popcornpolymerisation ohne Lösemittel, d.h. in Substanz, durchzuführen, wird das Monomergemisch aus N-Vinyl-Pyrrolidon und Vernetzer durch Einleiten von Stickstoff inertisiert und anschließend auf eine Temperatur in dem Bereich von 100 bis 200, vorzugsweise 150 bis 180°C erhitzt. Es ist vorteilhaft, auch während der Polymerisation weiter einen schwachen Stickstoffstrom durch die Monomeren zu leiten. Ausschluß von Sauerstoff wird auch dadurch erreicht, daß man den Ansatz bei einem Druck polymerisiert, der unter dem Atmosphärendruck liegt und bei dem die Monomeren sieden. Man kann jedoch die Popcornpolymerisation unter vermindertem Druck und gleichzeitigem Einleiten eines Inertgases durchführen. Je nach Art der eingesetzten Monomeren und der gewählten Temperatur polymerisiert die Mischung innerhalb von 1 bis 20 Stunden. Beispielsweise bilden sich bei der Polymerisation von N-Vinylcarbonsäureamiden-Pyrrolidon mit 2 Gew.-% N,N'-Divinylethylenharnstoff bei 150°C unter Rühren mit einem kräftigen Rührwerk und einem Druck von 310mbar und Einleiten von Stickstoff nach 2,5 Stunden die ersten PolymerisatPartikel, deren Menge langsam zunimmt, bis nach 10 Stunden Polymerisationszeit das Reaktionsgemisch aus einem Pulver besteht.

Zur Herstellung der Popcornpolymerisate wird jedoch die Fällungspolymerisation in Wasser bevorzugt. Die Konzentration der Monomeren wird dabei zweckmäßigerweise so gewählt, daß das Reaktionsgemisch über die gesamte Reaktionsdauer hinweg gut gerührt werden kann. Bei einer zu hohen Konzentration der Monomeren in Wasser, z. B. bei 95 Gew.-%, werden die Polymerisatkörner klebrig, so daß ein Rühren schwieriger wird als in verdünnterer wäßriger Lösung. Um die Reaktion in den üblichen Rührkesseln durchzuführen, wählt man beispielsweise Monomerkonzentrationen, bezogen auf die wäßrige Mischung, von etwa 5 bis 30, vorzugsweise 10 bis 20 Gew.-%. Falls kräftigere Rührwerke zur Verfügung stehen, kann die Monomerkonzentration der wäßrigen Lösung auch bis auf 50 Gew.-%, gegebenenfalls auch darüber erhöht werden. In einigen Fällen kann es zweckmäßig sein, die Popcornpolymerisation mit einer relativ konzentrierten Lösung zu beginnen und dann im Verlauf der Reaktion Wasser zur Verdünnung zuzusetzen.

Die Popcornpolymerisation wird bevorzugt bei pH-Werten oberhalb von 6 durchgeführt, um eine eventuell mögliche Hydrolyse der Monomeren zu vermeiden. Die Einstellung des pH-Wertes kann durch Zugabe geringer Mengen an Basen wie Natriumhydroxid oder Ammoniak oder der üblichen Puffersalze wie Soda, Natriumhydrogencarbonat oder Natriumphosphat erfolgen. Gegebenenfalls kann der Ausschluß von Sauerstoff dadurch erreicht werden, daß man das zu polymerisierende Gemisch zum Sieden erhitzt und zusätzlich einen Inertgasstrom zur Regelung der Partikelgröße der Popcornpolymerisate durch das Reaktionsgemisch leitet.

In einigen Fällen kann es auch vorteilhaft sein, dem Reaktionsgemisch zur völligen Entfernung von gelöstem Sauerstoff geringe Mengen - z.B. 0,1 bis 1 Gew.-%, bezogen auf die Monomeren - eines Reduktionsmittels wie Natriumsulfit, Natriumpyrosulfit, Natriumdithionit, Ascorbinsäure oder Mischungen der Reduktionsmittel, zuzusetzen.

Daher betrifft die vorliegende Erfindung weiterhin das erfindungsgemäße Verfahren, wobei man die Popcornpolymerisation in Gegenwart eines Reduktionsmittels durchführt.

Das zugesetzte Reduktionsmittel hat einen Effekt auf die Partikelgrößenverteilung der resultierenden Popcornpolimerisate. In Falle des Zusetzen eines Reduktionsmittels ist also ein weiterer Parameter vorhanden, den der Fachmann zur Einstellung der gewünschten erfindungsgemäßen Partikelgrößenverteilung durch Routineversuche einstellen muß. In der Regel führt eine höhere Menge an Reduktionsmittel zu kleineren Polymerpartikeln.

Vorzugsweise beginnt man mit dem Einleiten des Inertgases in die Reaktionsmischung vor der Zugabe des Reduktionsmittels.

Die Popcornpolymerisate können aus der wäßrigen Lösung isoliert und gereinigt werden. Die Popcornpolymerisate fallen üblicherweise mit einer Ausbeute von etwa 90 bis > 99% der theoretischen Ausbeute an. Sie können aus der wäßrigen Suspension durch Filtrieren oder Zentrifugieren mit anschließendem Auswaschen mit Wasser und Trocknen in üblichen Trocknern wie Umluft- oder Vakuumtrockenschrank, Schaufeltrockner, Taumeltrockner, Wirbelschichttrockner oder Stromtrockner isoliert werden. Die Popcornpolymerisate sind in Wasser und allen Lösemitteln praktisch nicht löslich und quellen darin auch nur geringfügig.

Die quervernetzten Polyvinyl-Pyrrolidon-Partikel fallen dabei direkt in der erfindungsgemäßen Partikel-Zusammensetzung mit der speziellen erfindungsgemäßen Partikelgrößen-Verteilung an.

Ferner betrifft die Erfindung kompakte, teilchenförmige Waschund Reinigungsmittel, die die erfindungsgemäßen Partikel-Zusammensetzungen in Mengen von 0,5 bis 20 Gew.-%, vorzugsweise 0,5 bis 10 Gew.-%, besonders bevorzugt 0,5 bis 5 Gew.-% enthalten.

Kompakte, teilchenförmige Wasch- und Reinigungsmittel wurden bereits vorstehend erklärt. Bevorzugte kompakte, teilchenförmige Wasch- und Reinigungsmittel sind Formkörper, die sich zum Waschen von Wäsche eignen, also kompakte, teilchenförmige Wasch- und Reinigungsmittel, die neben der erfindungsgemäßen Partikel-Zusammensetzung als Sprengmittel die üblichen Inhaltsstoffe von Waschmitteln für Wäsche enthalten.

Die erfindungsgemäßen kompakten, teilchenförmige Wasch- und Reinigungsmittel werden in an sich bekannter Weise durch Informbringen, insbesondere durch Kompaktieren oder Verdichten, vorzugsweise durch Verpressen der pulverförmigen Bestandteile (Erfindungsgemäße Partikel-Zusammensetzung als Sprengmittel und übliche Inhaltsstoffe von Wasch- oder Reinigungsmitteln, Bleichmitteln und Wasserenthärtern) hergestellt ("Tablettierung: Stand der Technik", SÖFW-Journal, 1996, 122. Jahrgang., S. 1016-1021).

Übliche Inhaltsstoffe von kompakten, teilchenförmigen Wasch- und Reinigungsmitteln sind beispielsweise ionische, nichtionische, kationische, amphotere und zwitterionische Tenside, anorganische und organische, wasserlösliche oder wasserunlösliche Buildersubstanzen und Cobuilder, Bleichmittel, insbesondere Peroxybleichmittel, aber auch Aktivchlorverbindungen, welche vorteilhafterweise umhüllt sind, Bleichaktivatoren und Bleichkatalysatoren, Enzyme und Enzymstabilisatoren, Schauminhibitoren, Vergrauungsinhibitoren, Farbübertragungsinhibitoren, optische Aufheller, Substanzen, welche das Wiederanschmutzen von Textilien verhindern, sogenannte soil repellents, sowie übliche anorganische Salze wie Sulfate und organische Salze wie Phosphonate, optische Aufheller, Farb- und Duftstoffe oder Korrosionsinhibitoren.

Bevorzugte Waschmittel sind sogenannte Kompaktwaschmittel, die als Inhaltsstoffe mindestens ein Tensid und mindestens einen Builder enthalten.

Zur Herstellung der erfindungsgemäßen kompakten, teilchenförmigen Wasch- und Reinigungsmittel wird die erfindungsgemäße Partikel-Zusammensetzung, vorzugsweise in Mengen von 0,5 bis 20 Gew.-%, besonders bevorzugt 0,5 bis 10 Gew.-%, ganz besonders besonders bevorzugt 0,5 bis 5 Gew.-%, bezogen auf das Gewicht des hergestellten wasch- und reinigungsaktiven Formkörpers, den pulverigen üblichen Inhaltsstoffen von Wasch- oder Reinigungsmitteln, Bleichmitteln und Wasserenthärtern oder deren pulverförmigen Vorstufen bzw. Teilkomponenten vor dem abschließenden Kompaktierungs- oder Tablettierungsschritt zugesetzt. Die pulverigen, üblichen Inhaltsstoffe von Wasch- oder Reinigungsmitteln, Eleichmitteln und Wasserenthärtern, deren Vorstufen bzw. Teilkomponenten liegen beispielsweise als Pulver, Granulat oder in Form von Strängen vor. Sie haben Teilchengrößen in dem Bereich von beispielsweise 200 µm bis 3 mm, vorzugsweise 250 µm bis 2 mm.

Nach dem Mischen der pulverigen, üblichen Inhaltsstoffe von Wasch- oder Reinigungsmitteln, Bleichmitteln und Wasserenthärtern bzw. ihrer Teilkomponenten mit der erfindungsgemäßen Partikel-Zusammensetzung erfolgt, ggf. nach weiteren Mischschritten, eine Verarbeitung der Mischung zu aggregierten, kompakten Formkörpern unter Erhöhung der Dichte, z.B. durch Extrudieren oder Verpressen der Mischung. Man erhält so beispielsweise Tabletten, Kugeln, Stränge, Ringe oder Schuppen. Man kann die Mischung dabei vorteilhaft so portionieren, daß man z.B. Tabletten oder Kugeln in einer solchen Größe herstellt, daß für einen Waschgang in einer Waschmaschine beispielsweise nur ein bis drei Tabletten oder Kugeln erforderlich sind. Der Durchmesser der Formkörper aus den konfektionierten Mischungen beträgt beispielsweise 1 bis 50 mm, vorzugsweise 2 bis 35 mm.

Die erfindungsgemäße Partikel-Zusammensetzung führt selbst in geringen Mengen zu einer beträchtlichen Steigerung der Zerfallsgeschwindigkeit von kompakten, teilchenförmigen Wasch- und Reinigungsmitteln beim Zusammenbringen mit Wasser. Auch bei bruchfesten, stark verdichteten Formkörpern wird innerhalb weniger Sekunden der Zerfall erreicht. Dadurch ist es nicht nur möglich die kompakten, teilchenförmigen Wasch- und Reinigungsmittel mittels einer Dosiervorrichtung direkt in die wäßrige Flotte eines maschinellen Verfahrens zu geben sondern auch die kompakten, teilchenförmigen Wasch- und Reinigungsmittel direkt in der Einspülrinne der handelsüblichen Haushaltsmaschinen, insbesondere der Waschgeräte, zu plazieren. Die geringere Menge an zugesetzten Sprengmittel-Polymeren führt zu einer geringeren ökologischen Belastung des Abwassers.

Die nachstehenden Beispiele verdeutlichen die Erfindung

### Beispiel 1

### Herstellung einer Partikel-Zusammensetzung aus Partikeln aus quervernetztem Polyvinylpyrrolidon mit der erfindungsgemäßen Partikelgrößen-Verteilung im Liter-Maßstab

In einer Rührapparatur wurden 1375 g destilliertes Wasser, 115 g N-Vinylpyrrolidon, 2,6 g N,N'-Divinylethylen-harnstoff und 0,05 g Natriumhydroxid vorgelegt und unter Rühren mit einer Drehzahl von 60 UpM auf 60°C erhitzt. Die Lösung wurde schon während der Aufheizperiode bis zum Abschluß der Polymerisation mit Stickstoff durchströmt, der mit Hilfe eines Rohres, das bis zum Boden der Rührapparatur reichte, in die Reaktionsmischung eingeführt wurde. Die Strömungsgeschwindigkeit betrug 6 l/h (4,8 [l/h und Liter Reaktionsmischung]). Nachdem die Temperatur der Reaktionsmischung 60°C erreicht hatte, wurden 130 mg Natriumdithionit zugesetzt. Die Mischung wurde auf 60°C gehalten. Die Popcornpolymerisation begann nach ca. 20 Minuten und war nach 5 Stunden beendet. Die viskose Suspension wurde anschließend abfiltriert und mit Wasser gewaschen (ca. 2000 ml), um Verunreinigungen wie lösliches Polymer und restliche Monomere zu entfernen. Die Ausbeute an Popcornpolymerisat betrug 97%.

### Siebanalyse:

| Beispiel 1 | |
|---|---|
| Partikelgröße [µm] | Anteil [%] |
| > 500 | 72,0 |
| 250-500 | 13,6 |
| < 250 | 14,4 |

### Beispiel 2

### Herstellung einer Partikel-Zusammensetzung aus Partikeln aus quervernetztem Polyvinylpyrrolidon mit der erfindungsgemäßen Partikelgrößen-Verteilung im 1000 Liter-Maßstab

In einem Rührkessel wurden 1375 kg destilliertes Wasser, 115 kg N-Vinylpyrrolidon, 2,6 kg N,N'-Divinylethylen-harnstoff und 1 kg 5%-ige Natronlauge vorgelegt und unter Rühren mit einer Drehzahl von 60 UpM auf 75°C erhitzt, wobei die Lösung während des Erhitzens und der Polymerisation mit Stickstoff durchströmt wurde, der am Boden des Polymerisationsgefäßes in die Reaktionsmischung geleitet wurde. Die Strömungsgeschwindigkeit betrug 1150 l/h (0,8 [l/h und Liter Reaktionsmischung]). Nachdem die Temperatur des Reaktionsgemisches auf 75°C angestiegen war, gab man 26 g Natriumdithionit - gelöst in 30 ml Wasser - zu. Die Mischung wurde auf 75°C gehalten und fortwährend gerührt. Die Popcornpolymerisation begann nach ca. 20 Minuten und war nach 6 Stunden beendet. Die viskose Suspension wurde nun abfiltriert und mit Wasser gewaschen, um Verunreinigungen wie lösliches Polymer und nicht polymerisierte Monomere zu entfernen. Die Ausbeute an Popcorn-Polymerisat betrug 94%.

### Siebanalyse:

| Beispiel 2 | |
|---|---|
| Partikelgröße [µm] | Anteil [%] |
| > 500 | 50 |
| 250-500 | 30 |
| < 250 | 20 |

### Siebanalyse in weiteren Siebschritten:

| Beispiel 2 | |
|---|---|
| Partikelgröße [µm] | Anteil [%] |
| >1000 | 16 |
| 630 - 1000 | 24 |
| 400 - 630 | 35 |
| 200 - 400 | 11 |
| 63 - 200 | 14 |
| < 63 | 0,1 |

### Beispiele 3

### Herstellung von kompakten, teilchenförmigen Waschmitteln

Aus einem pulverförmigen, granulierten Waschmittel der unten angegebenen Zusammensetzung A (Schüttdichte ca. 770 g/l) und verschiedenen Partikel-Zusammensetzungen aus Partikeln aus quervernetztem Polyvinylpyrrolidon als Sprengmittel
Beispiel 3.1: Erfindungsgemäße Partikel-Zusammensetzung hergestellt gemäß Beispiel 2;
Beispiel 3.2: Vergleichsbeispiel mit einem handelsüblichen Popcornpolymer auf Basis von Polyvinylpyrrolidon und einer mittleren Teichengröße kleiner als 100 µm;
Beispiel 3.3: Vergleichsbeispiel, direkt übernommen aus EP 1036839, Beispiel 1)
wurden in einem Mischer homogene Gesamtmischungen hergestellt, die jeweils mit einer in der Technik üblichen Exzenterpresse (Fa. Korsch, Typ EK 0 DMS) unter den in der Tabelle angegebenen Bedingungen zu Tabletten von ca. 3 g (Durchmesser 20 mm) verpreßt wurden.

Die Mischungen der Beispiele 3.1 und 3.2 enthielten jeweils 2 Gew.-%, die Mischung von Beispiel 3.3 enthielt 5 Gew.-% der Partikel-Zusammensetzung aus Partikeln quervernetzten Polyvinylpyrrolidon, jeweils bezogen auf die Gesamtmenge der Mischung.

Die Härte der Tabletten wurde mit Hilfe eines Tablettentestgeräts der Fa. Kraemer, Darmstadt, bestimmt. Das Gerät mißt die horizontale Kraft, die erforderlich ist, um eine Tablette zu zerbrechen.

Die Tabletten wurden bezüglich des Auflöseverhaltens in Wasser getestet (siehe Tabelle 1). Zur Bestimmung des Auflöseverhaltens in Wasser wurde ein Zerfallzeit-Testgerät der Fa. Erweka benutzt.

Dazu wurden die Tabletten in einem Zerfalltestkorb mit Siebboden in einem temperierten Wasserbad bewegt (30 Auf- und Abwärts-Bewegungen pro Minute mit einer Hubhöhe von 20 mm). Man bestimmte die Zeit, nach der sich kein Rückstand mehr auf dem Siebboden befand. Die Ergebnisse sind in der Tabelle angegeben.

| Waschmittel der Zusammensetzung A (alle Angaben in Gew.-%) | |
|---|---|
| Alkylbenzolsulfonat | 8 |
| Kalikokosseife | 1,2 |
| Nichtionisches Tensid | 6 (1 Mol C₁₃/C₁₅-Fettalkohol, umgesetzt mit 7 Mol Ethylenoxid |
| Zeolith A | 35 |
| Natriumcarbonat | 8 |
| Natriummetasilikat x 5,5 H₂O | 6 |
| Natriumcitrat | 4 |
| Natriumpercarbonat | 18 |
| Tetraacetylethylendiamin (TAED) | 5 |
| Komplexbildner | 0,3 (Ethylendiamintetramethylenphosphonat) |
| Copolymer Acrylsäure/ | |
| Maleinsäure 70:30, Molmasse 70000 | 4 |
| Natriumsulfat | 3 |
| Übrige Bestandteile | 2,5 (Duftstoffe, Schaumdämpfer, Enzyme, opt. Aufheller) |
| Schüttdichte ca. 770 g/l | |
| Teichengröße ca. 700-1000 µm | |

**Tabelle 1**

| Eigenschaften der Waschmitteltabletten | | | |
|---|---|---|---|
| | Beispiel 3.1 | Beispiel 3.2 (Vergleichsbeispiel) | Beispiel 3.3 (Vergleichsbeispiel) |
| Verwendete Partikel-Zusammensetzung als Sprengmittel | hergestellt nach Beispiel 2 | handelsübliches Popcornpolymer | gemäß Beisp. 1 EP 1036839 |
| Menge an eingesetztem PVP in [Gew.-%] | 2 | 2 | 5 |
| Preßkraft in [kN] | 9,0 | 5,98 | 6,48 |
| Preßdruck in [MPa] | 14,5 | | |
| Bruchkraft in [N] | | | <3 |
| Auflöseverhalten in Wasser | < 30 Sekunden | < 15 Minuten | < 5 Sekunden |

Es ist zu sehen, daß durch Zusatz der erfindungsgemäßen Partikel-Zusammensetzung ein deutlich schnellerer Zerfall der Waschmitteltabletten erreicht wird. Im Vergleich zu EP 1036839 sind deutlich geringere Mengen an quervernetztem Polyvinylpyrrolidon als Sprengmittel ausreichend um einen vergleichbar schnellen Zerfall zu erreichen. Dies hat den Vorteil, daß die ökologische Belastung des Abwassers deutlich geringer ist.

## Patentansprüche

1. Verwendung einer Partikel-Zusammensetzung, enthaltend Partikel aus quervernetztem Polyvinylpyrrolidon als Sprengmittel in kompakten, teilchenförmigen Wasch- und Reinigungsmitteln, **dadurch gekennzeichnet, daß**
A höchstens 10 Gew.-% der Partikel des quervernetzten Polyvinylpyrrolidons eine Partikelgröße kleiner 63 µm,
B höchstens 30 Gew.-% und mindestens 0,1 Gew.-% der Partikel des quervernetzten Polyvinylpyrrolidons eine Partikelgröße größer 1000 µm und
C mindestens 10 Gew.-% der Partikel des quervernetzten Polyvinylpyrrolidons eine Partikelgröße kleiner 200 µm aufweisen.

2. Verwendung nach Anspruch 1, **dadurch gekennzeichnet, daß** die Partikel-Zusammensetzung mit der Partikelgrößenverteilung gemäß den Merkmalen A, B und C direkt durch ein Polymerisationsverfahren oder durch Klassieren der aus der Polymerisation und Trocknung erhaltenen Polyvinylpyrrolidonfestkörper erhalten wird.

3. Partikel-Zusammensetzung, enthaltend Partikel aus quervernetztem Polyvinylpyrrolidon mit einer Partikelgrößenverteilung, in der
A höchstens 10 Gew.-% der Partikel des quervernetzten Polyvinylpyrrolidons eine Partikelgröße kleiner 63 µm,
B höchstens 30 Gew.-% und mindestens 0,1 Gew.-% der Partikel des quervernetzten Polyvinylpyrrolidons eine Partikelgröße größer 1000 µm und
C mindestens 10 Gew.-% der Partikel des quervernetzten Polyvinylpyrrolidons eine Partikelgröße kleiner 200 µm aufweisen.

4. Kompakte, teilchenförmige Wasch- und Reinigungsmittel, enthaltend in Mengen von 0,5 bis 20 Gew.-% bezogen auf die Gesamtmasse eine Partikel-Zusammensetzung gemäß Anspruch 3.

5. Verfahren zur Herstellung von kompakten, teilchenförmigen Wasch- und Reinigungsmittel, enthaltend quervernetztes Polyvinylpyrrolidon als Sprengmittel, indem man eine Partikel-Zusammensetzung gemäß Anspruch 3 in Mengen von 0,5 bis 20 Gew.-% bezogen auf das Gesamtgewicht mit den pulverförmigen Inhaltsstoffen von Waschmitteln vermischt und anschließend das Gemisch durch Verdichten in eine kompakte Form überführt.

6. Verfahren zur Herstellung einer Partikel-Zusammensetzung gemäß Anspruch 3 durch Popcornpolymerisation, wobei man Popcornpolymerisate bildende Reaktionsmischungen aus N-Vinyl-Pyrrolidon und Vernetzer unter Ausschluß von Sauerstoff und Polymerisationsinitiatoren bei Temperaturen bis zu 200°C polymerisiert, die Popcornpolymerisation als Fällungspolymerisation in Wasser oder in Substanz durchführt und die Partikelgröße der Popcornpolymeren durch Einleiten eines Inertgasstroms in die Reaktionsmischung regelt.

7. Verfahren nach Anspruch 6, **dadurch gekennzeichnet, daß** man 0,01 bis 100 l Inertgas pro Stunde und 1 Reaktionsmischung in die Reaktionsmischung einleitet.

8. Verfahren nach Anspruch 6 oder 7, **dadurch gekennzeichnet, daß** man die Popcornpolymerisation in Gegenwart eines Reduktionsmittels durchführt.

9. Verfahren nach Anspruch 8, **dadurch gekennzeichnet, daß** man mit dem Einleiten des Inertgases in die Reaktionsmischung vor der Zugabe des Reduktionsmittels beginnt.

10. Verfahren nach einem der Ansprüche 6 bis 9, **dadurch gekennzeichnet, daß** man als Inertgas Stickstoff verwendet.

11. Verfahren nach einem der Anprüche 6 bis 10, **dadurch gekennzeichnet, daß** man als Vernetzer N,N'-Divinylethylenharnstoff einsetzt.

## Claims

1. The use of a particle composition comprising particles of crosslinked polyvinylpyrrolidone as a disintegrant in a compact particulate laundry detergent or cleaning product, wherein
A not more than 10% by weight of the particles of the crosslinked polyvinylpyrrolidone have a size less then 63 µm,
B not more than 30% by weight and at least 0.1% by weight of the particles of the crosslinked polyvinylpyrrolidone have a size greater than 1000 µm, and
C at least 10% by weight of the particles of the crosslinked polyvinylpyrrolidone have a size less than 200 µm.

2. The use as claimed in claim 1, wherein the particle composition having the particle size distribution according to features A, B and C is obtained directly by a polymerization process or by classifying the polyvinylpyrrolidone solids obtained by polymerization and drying.

3. A particle composition comprising particles of crosslinked polyvinylpyrrolidone with a size distribution in which
A not more than 10% by weight of the particles of the crosslinked polyvinylpyrrolidone have a size less than 63 µm,
B not more than 30% by weight and at least 0.1% by weight of the particles of the crosslinked polyvinylpyrrolidone have a size greater than 1000 µm, and
C at least 10% by weight of the particles of the crosslinked polyvinylpyrrolidone have a size less than 200 µm.

4. A compact particulate laundry detergent or cleaning product comprising in amounts of from 0.5 to 20% by weight based on its overall mass a particle composition as claimed in claim 3.

5. A process for preparing compact particulate laundry detergents and cleaning products comprising crosslinked polyvinylpyrrolidone as disintegrant by mixing a particle composition as claimed in claim 3 in amounts of from 0.5 to 20% by weight based on its overall weight with the pulverulent ingredients of laundry detergents and then converting the mixture into a compact form by compaction.

6. A process for preparing a particle composition as claimed in claim 3 by popcorn polymerization of popcorn-polymer-forming reaction mixtures of N-vinylpyrrolidone and crosslinker in the absence of oxygen and initiators at temperatures up to 200°C as a precipitation polymerization in water or in bulk with the particle size of the popcorn polymers controlled by introduction of a stream of inert gas into the reaction mixture.

7. A process as claimed in claim 6, wherein from 0.01 to 100 1 of inert gas per hour per 1 of reaction mixture are introduced into the reaction mixture.

8. A process as claimed in claim 6 or 7, conducted in the presence of a reducing agent.

9. A process as claimed in claim 8, wherein the introduction of the inert gas into the reaction mixture is commenced prior to the addition of the reducing agent.

10. A process as claimed in any of claims 6 to 9, wherein the inert gas used comprises nitrogen.

11. A process as claimed in any of claims 6 to 10, wherein N,N'-divinylethyleneurea is used as crosslinker.

## Revendications

1. Utilisation d'une composition de particules contenant des particules de polyvinylpyrrolidone à réticulation transversale en tant qu'agent de délitement dans des détergents et des produits de nettoyage particulaires compacts, **caractérisé en ce que**
A au maximum 10% en poids des particules de polyvinylpyrrolidone à réticulation transversale présentent une granulométrie inférieure à 63 µm,
B au maximum 30% en poids et au moins 0,1% en poids des particules de polyvinylpyrrolidone à réticulation transversale présentent une granulométrie supérieure à 1000 µm et
C au moins 10% en poids des particules de polyvinylpyrrolidone à réticulation transversale présentent une granulométrie inférieure à 200 µm.

2. Utilisation selon la revendication 1, **caractérisée en ce que** l'on obtient la composition de particules présentant la distribution granulométrique selon les points caractéristiques A, B et C directement au moyen d'un procédé de polymérisation ou au moyen d'une classification des corps solides de polyvinylpyrrolidone obtenus par une polymérisation et un séchage.

3. Composition de particules, contenant des particules de polyvinylpyrrolidone à réticulation transversale présentant une distribution granulométrique, dans laquelle
A au maximum 10% en poids des particules de polyvinylpyrrolidone à réticulation transversale présentent une granulométrie inférieure à 63 µm,
B au maximum 30% en poids et au moins 0,1% en poids des particules de polyvinylpyrrolidone à réticulation transversale présentent une granulométrie supérieure à 1000 µm et
C au moins 10% en poids des particules de polyvinylpyrrolidone à réticulation transversale présentent une granulométrie inférieure à 200 µm.

4. Détergents et produits de nettoyage particulaires compacts, contenant une composition de particules selon la revendication 3 à raison de 0,5% à 20% en poids par rapport à la masse totale.

5. Procédé de préparation de détergents et de produits de nettoyage particulaires compacts, contenant de la polyvinylpyrrolidone à réticulation transversale en tant qu'agent de délitement, dans lequel on mélange une composition de particules selon la revendication 3 à raison de 0,5% à 20% en poids par rapport à la masse totale avec les composants en poudre de détergents puis on transforme le mélange en une forme compacte au moyen d'une compression.

6. Procédé de préparation d'une composition de particules selon la revendication 3 au moyen d'une polymérisation "popcorn", dans laquelle on polymérise, en l'absence d'oxygène et d'amorceurs de polymérisation, à des températures allant jusqu'à 200°C, des mélanges réactionnels composés de N-vinylpyrrolidone et d'agent réticulant, formant des polymères "popcorn", on réalise la polymérisation "popcorn" sous la forme d'une polymérisation par précipitation dans de l'eau ou en substance et on ajuste la granulométrie des polymères "popcorn" en introduisant un courant de gaz inerte dans le mélange réactionnel.

7. Procédé selon la revendication 6, **caractérisé en ce que** l'on introduit 0,01 L à 100 L de gaz inerte par heure et par litre de mélange réactionnel dans le mélange réactionnel.

8. Procédé selon la revendication 6 ou 7, **caractérisé en ce que** l'on réalise la polymérisation "popcorn" en présence d'un agent de réduction.

9. Procédé selon la revendication 8, **caractérisé en ce que** l'on commence l'introduction du gaz inerte dans le mélange réactionnel avant d'ajouter l'agent de réduction.

10. Procédé selon l'une quelconque des revendications 6 à 9, **caractérisé en ce que** l'on utilise de l'azote en tant que gaz inerte.

11. Procédé selon l'une quelconque des revendications 6 à 10, **caractérisé en ce que** l'on utilise de la N,N'-divinyléthylène-urée en tant qu'agent réticulant.
